# EUROPEAN PATENT APPLICATION

(11) **EP 4 012 219 A1**
(43) Date of publication of application: **15.06.2022**
(21) Application number: 21211234.6
(22) Date of filing: 30.11.2021
(51) Int. Cl.: F16F 15/02, F16F 15/03, G05D 19/02

(54) **ACTIVE VIBRATION ISOLATION SYSTEM**

(30) Priority: 08.12.2020 JP 2020203570; 26.02.2021 JP 2021030019
(71) Applicant: Kurashiki Kako Co., Ltd., Kurashiki-shi Okayama 712-8555 (JP)
(72) Inventor: OTA, Hiroto, Okayama, 712-8555 (JP); TAKAHASHI, Shingo, Okayama, 712-8555 (JP); YAMAMOTO, Shuji, Okayama, 712-8555 (JP); FUJIWARA, Yasunari, Okayama, 712-8555 (JP)
(74) Representative: Behr, Wolfgang

(57) **Abstract**

A purpose is to enhance vibration isolation performance of an active vibration isolation system with a simple configuration.

An active vibration isolation system 1 includes a plurality of active vibration isolation devices 20 each including: coil springs 24 elastically supporting a supported body 3 to a base 2; a vibration sensor 26, 27 configured to detect vibration states of the supported body and the base; an actuator 25 configured to apply a controlling force to the supported body: and a controller 28 configured to control the actuator so as to apply a controlling force to the supported body based on the vibration states detected by the sensor, the controlling force being used for attenuating vibrations of the supported body and vibrations transferred from the base to the supported body. The active vibration isolation devices are disposed at different locations on the base to support the supported body. The controller of each active vibration isolation device applies a controlling force to a portion of the supported body corresponding to a location on which the active vibration isolation device is placed, independently of and separately from the controller of the other active vibration isolation devices, based on vibration states of portions of the supported body and the base corresponding to the location detected by the sensor.

## Description

### CROSS-REFERENCE TO RELATED APPLICATION

This application claims priority to Japanese Patent Application No. 2020-203570 filed on December 8, 2020 and Japanese Patent Application No. 2021-030019 filed on February 26, 2021, the disclosures of which including the specifications, the drawings, and the claims are hereby incorporated by reference in their entirety.

### BACKGROUND

The present disclosure relates to an active vibration isolation system.

A known active vibration isolation device applies a controlling force that reduces vibrations in a predetermined direction, to a supported body elastically supported to a base.

For example, an active vibration isolation device described in Japanese Patent Application Publication No. 2012-47308 is configured such that a vibration control unit including an actuator and a vibration sensor is disposed obliquely to a vertical axis to thereby cause a driving force of the actuator to be exerted on a supported body obliquely to the vertical axis.

With this configuration, the single vibration control unit enables reduction of vibrations including a vertical component and a horizontal component so that flexibility in arrangement of the actuator can be enhanced. Accordingly, although a conventional perpendicular alignment employs 8-point control because of poor alignment balance, 6-point control can be achieved. Thus, the configuration of the active vibration isolation device can be simplified so that an increase in size of the device, an increase in the number of assembly processes, or an increase in manufacturing costs can be avoided.

### SUMMARY

An active vibration isolation device of this type generally employs a rigid body model in which a supported body is regarded as a rigid body, one vibration state is detected as the entire supported body, and based on the detected vibration state of the entire supported body, vibration isolation control is performed.

However, the supported body is not a complete rigid body, and thus, the vibration state of the supported body can vary among portions. In the above-mentioned control method based on the vibration state of the entire supported body, although the vibration state of the supported body varies among portions, one vibration state is uniquely detected as the entire supported body. Thus, sufficient vibration isolation performance will not be exhibited. The same holds for a vibration state of the base.

It is therefore an object of the present disclosure to enhance vibration isolation performance of an active vibration isolation system with a simple configuration.

An active vibration isolation system according to the present disclosure includes a plurality of active vibration isolation devices, and each of the plurality of active vibration isolation devices includes an elastic body configured to elastically support a supported body to a base, a vibration detector configured to detect vibration states of at least one of the supported body or the base in at least three translational directions including a vertical direction and a horizontal direction, an actuator configured to apply a controlling force to the supported body, a control unit configured to control the actuator such that the actuator applies a controlling force to the supported body based on the vibration states detected by the vibration detector the controlling force being used for attenuating at least one of vibrations of the supported body or vibrations transferred from the base to the supported body, wherein the active vibration isolation devices are disposed at different locations on the base to support the supported body, and the control unit of each of the active vibration isolation devices is configured to apply the controlling force to a portion of the supported body corresponding to one of the locations at which the active vibration isolation devices are placed, independently of and separately from the control units of the other active vibration isolation devices, based on vibration states of a portion of at least one of the supported body or the base corresponding to the location detected by the vibration detector.

With this configuration, vibration isolation control can be individually performed in accordance with a vibration state that varies among locations at which the active vibration isolation devices are placed. Thus, vibration isolation performance can be sufficiently exhibited, as compared to a control method based on a vibration state of the entire supported body or the entire base.

In addition, it is sufficient to support the supported body by the plurality of active vibration isolation devices. Thus, the configuration can be simplified.

In the manner described above, vibration isolation performance of the active vibration isolation system can be enhanced with a simple configuration.

In one embodiment, the actuator is tilted with respect to the base.

With this configuration, since the actuators are tilted with respect to the base, each actuator can apply a controlling force to the supported body in both the vertical direction and the horizontal direction. Accordingly, flexibility of layout of the actuators can be increased. Thus, the number of actuators can be reduced, as compared to a case where each of the actuators is not tilted with respect to the base and is oriented only in the vertical direction and the horizontal direction.

In one embodiment, the vibration detector is tilted with respect to the base, and a tilt angle of the actuators is equal to a tilt angle of the vibration detector.

With this configuration, since the vibration detectors are tilted with respect to the base, each vibration detector can detect a vibration state of the supported body or the base both in the vertical direction and the horizontal direction. Accordingly, flexibility of layout of the vibration detectors can be increased. Thus, the number of vibration detectors can be reduced, as compared to a case where each of the vibration detector is not tilted with respect to the base and is oriented only in the vertical direction and the horizontal direction.

In addition, since the detection direction of the vibration state by the vibration detector coincides with the direction in which the controlling force is added by the actuator, angle conversion does not need to be performed between these directions, and thus, the configuration of the control unit can be simplified.

In one embodiment, the active vibration isolation devices are not in contact with one another.

With this configuration, interference of a controlling force among the active vibration isolation devices can be reduced.

According to the present disclosure, vibration isolation performance of an active vibration isolation system can be enhanced with a simple configuration.

### BRIEF DESCRIPTION OF THE DRAWINGS

FIG. 1 is a perspective view illustrating a schematic configuration of an active vibration isolation system according to the present disclosure.
FIG. 2 is a plan view illustrating an internal structure of each active vibration isolation device.
FIG. 3 is a front view illustrating a schematic configuration of an actuator and a supported body-side vibration sensor.
FIG. 4 is a front view illustrating a schematic configuration of a base-side vibration sensor.
FIG. 5 is a block diagram illustrating a control mode of the entire active vibration isolation system.
FIG. 6 is a graph showing vibration isolation performance of active vibration isolation systems according to an example and a comparative example.

### DETAILED DESCRIPTION

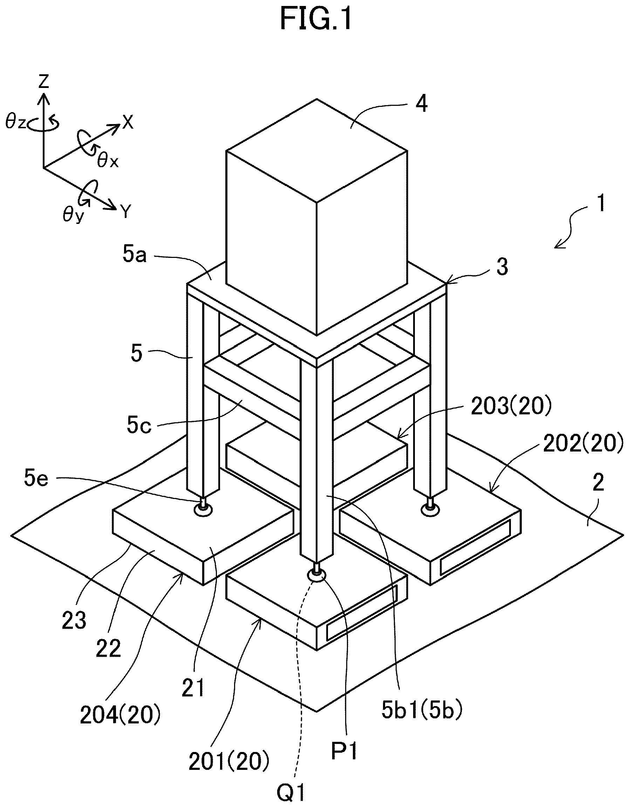

An embodiment of the present disclosure will be described in detail with reference to the drawings. The following embodiment is merely a preferred example in nature, and is not intended to limit the disclosure, applications, and use of the applications. In this embodiment, as illustrated in FIG. 1, two horizontal directions extending along a base and orthogonal to each other will be referred to as an X direction and a Y direction, and a vertical direction orthogonal to the base will be referred to as a Z direction. The X direction will also be referred to as a left-right direction, the Y direction will also be referred to as a front-rear direction, and the Z direction will also be referred to as a top-bottom direction.

### (Overall Configuration of Active Vibration Isolation System)

As illustrated in FIG. 1, an active vibration isolation system 1 includes four identical active vibration isolation devices 20. The active vibration isolation devices 20 are of the same type (same size and same performance). In the active vibration isolation system 1, a supported body 3 is elastically supported to a base 2, and a controlling force that attenuates vibrations in a predetermined direction is applied to the supported body 3 so that vibrations of the supported body 3 are thereby controlled. The base 2 is, for example, a floor surface on which the active vibration isolation devices 20 are placed.

The supported body 3 is constituted by a precision instrument 4 susceptible to the influence of vibrations, such as a semiconductor manufacturing device and an electron microscope, and a table 5 on which the precision instrument 4 is placed.

The table 5 has a four-leg structure, and includes an approximately square horizontal plate 5a, four legs 5b extending downward from the four corners of the horizontal plate 5a, beams 5c each coupling adjacent ones of the legs 5b, and a height adjustment levelers 5e each provided on the lower end of a corresponding one of the legs 5b.

The active vibration isolation devices 20 are disposed at different locations on the base 2 to support the supported body 3, and are aligned in the front-rear direction and in the left-right direction in correspondence with the four legs 5b of the table 5. The active vibration isolation devices 20 are not in contact with one another, and a gap is provided between adjacent ones of the active vibration isolation devices 20.

Each of the active vibration isolation devices 20 is disposed to support a corresponding one of the legs 5b (leveler 5e) of the table 5. Each of the legs 5b is placed on the center of the upper surface of a corresponding one of the active vibration isolation devices 20 such that a load is uniformly applied to the active vibration isolation device 20.

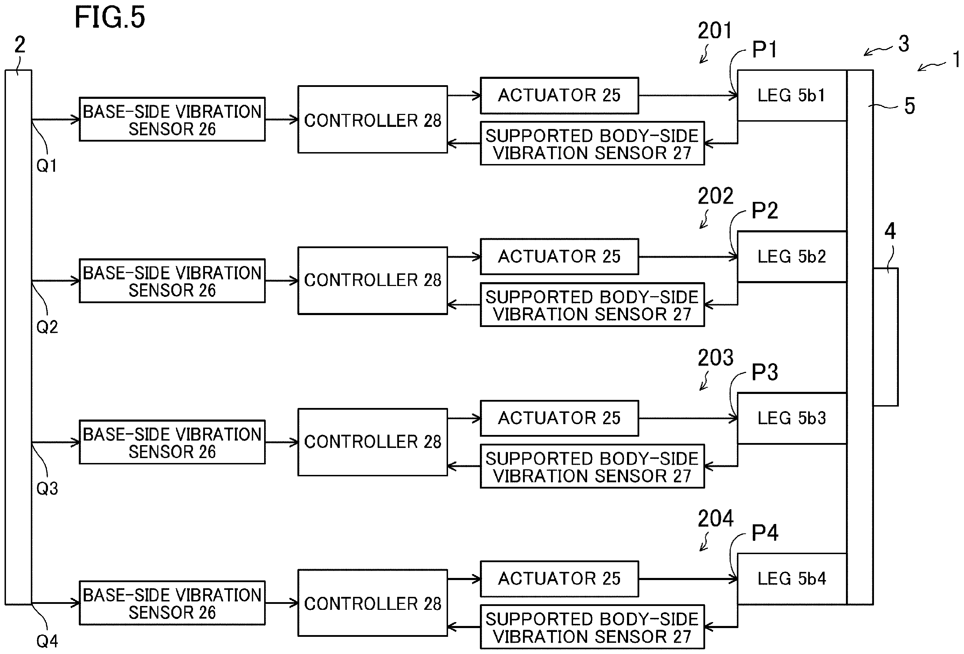

Specifically, the four active vibration isolation devices 20 are constituted by a first active vibration isolation device 201, a second active vibration isolation device 202, a third active vibration isolation device 203, and a fourth active vibration isolation device 204. The four legs 5b are constituted by a first leg 5b1, a second leg 5b2, a third leg 5b3, and a fourth leg 5b4. The first leg 5b1 is placed on the first active vibration isolation device 201. The second leg 5b2 is placed on the second active vibration isolation device 202. The third leg 5b3 is placed on the third active vibration isolation device 203. The fourth leg 5b4 is placed on the fourth active vibration isolation device 204. In FIG. 1, for the legs 5b, only the first leg 5b1 is denoted by a reference character as a representative, and reference characters for the second leg 5b2, the third leg 5b3, and the fourth leg 5b4 are not shown (see FIG. 5).

In FIG. 1, character P1 denotes a portion of the supported body 3 corresponding to a location at which the first active vibration isolation device 201 is placed, and is equivalent to the first leg 5b1. Character Q1 denotes a portion of the base 2 corresponding to a location at which the first active vibration isolation device 201 is placed, and is equivalent to a portion of the base 2 immediately under the first active vibration isolation device 201.

Although not shown in FIG. 1 (see FIG. 5), character P2 denotes a portion of the supported body 3 corresponding to a location at which the second active vibration isolation device 202 is placed, and is equivalent to the second leg 5b2. Character Q2 denotes a portion of the base 2 corresponding to a location at which the second active vibration isolation device 202 is placed, and is equivalent to a portion of the base 2 immediately under the second active vibration isolation device 202. Similarly, character P3 denotes a portion of the supported body 3 corresponding to a location at which the third active vibration isolation device 203 is placed, and is equivalent to the third leg 5b3. Character Q3 denotes a portion of the base 2 corresponding to a location at which the third active vibration isolation device 203 is placed, and is equivalent to a portion of the base 2 immediately under the third active vibration isolation device 203. Character P4 denotes a portion of the supported body 3 corresponding to a location at which the fourth active vibration isolation device 204 is placed, and is equivalent to the fourth leg 5b4. Character Q4 denotes a portion of the base 2 corresponding to a location at which the fourth active vibration isolation device 204 is placed, and is equivalent to a portion of the base 2 immediately under the fourth active vibration isolation device 204.

### (Configuration of Each Active Vibration Isolation Device)

As illustrated in FIG. 1, each of the active vibration isolation devices 20 is a rectangular parallelepiped having an approximately square shape when seen from above, and the height dimension is smaller than the width dimension. Each active vibration isolation device 20 includes an upper plate 21 constituting an upper face, a side plate 22 constituting side faces, and a lower plate 23 constituting a lower face.

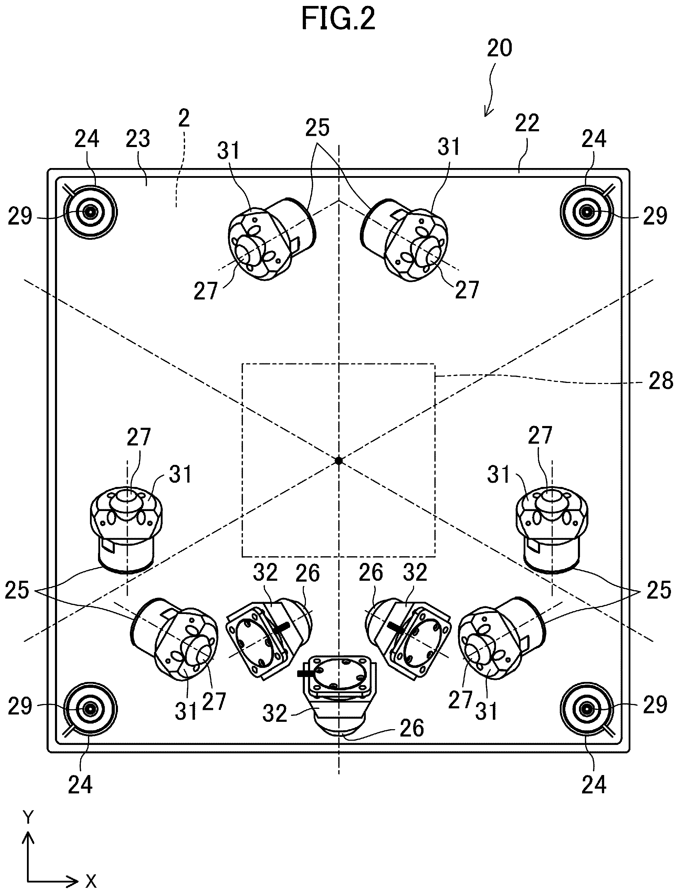

As illustrated in FIG. 2, the side plate 22 and the lower plate 23 are united and constitute substantially a box shape having an opening at the upper side, and the upper plate 21 (not shown in FIG. 2) is fitted in this opening.

Each active vibration isolation device 20 includes, as an internal configuration, four coil springs 24 as elastic bodies, six actuators 25, three base-side vibration sensors (FF sensors) 26 as a part of vibration detectors, six supported body-side vibration sensors (FB sensors) 27 as a part of the vibration detectors, and a controller 28 as a control unit.

The four coil springs 24 are respectively disposed at the four corners on the upper surface of the lower plate 23 with levelers 29 of ball screws. The coil springs 24 are used for elastically supporting the supported body 3 to the base 2 with the upper plate 21 and the lower plate 23 interposed between the supported body 3 and the base 2. The coil springs 24 are so-called variable pitch springs.

The six actuators 25 are arranged circumferentially with respect to the center of each of the active vibration isolation devices 20. The six actuators 25 constitute three pairs of actuators. Each of the actuator pairs is constituted by two actuators 25 and 25 whose lines of action of a controlling force extend in parallel with each other. Each of the actuators 25 applies a controlling force to the supported body 3 through the upper plate 21. The actuators 25 are linear motors.

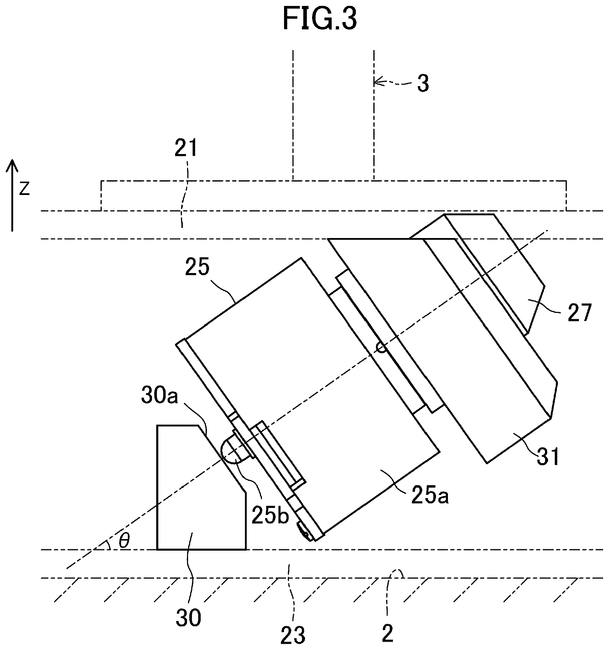

As illustrated in FIG. 3, each of the actuators 25 is placed on the lower plate 23 in such a manner that the line of action of the controlling force from the actuator 25 is tilted with respect to the base 2. The tilt angle of the line of action of each actuator 25 with respect to the base 2 is represented by θ.

Six support members 30 supporting the actuators 25 are attached to the lower plate 23. Each of the support members 30 causes the line of action of the corresponding actuator 25 to be tilted with respect to the base 2. Each of the support members 30 has a support face 30a orthogonal to the line of action of a controlling force of the corresponding actuator 25.

Each actuator 25 includes a cylinder wall 25a fixed to the upper plate 21 with a bracket 31 interposed between the cylinder wall 25a and the upper plate 21, and a sliding member 25b that reciprocates in the cylinder wall 25a.

The sliding member 25b is configured to come into contact with the support face 30a of the support member 30. A coil (not shown) in which a current in accordance with a control signal from the controller 28 flows and a magnet (not shown) are provided inside the cylinder wall 25a. An electromagnetic force generated by the coil and the magnet causes the sliding member 25b to reciprocate. This reciprocation of the sliding member 25b applies a controlling force in a direction orthogonal to the support face 30a to the supported body 3 through the upper plate 21.

The six actuators 25 individually apply controlling forces to the supported body 3 in the lines of actions thereof. Consequently, the controlling forces are applied to the supported body 3 in three translational directions (X, Y, and Z directions) including the vertical direction and the horizontal direction and in three rotational directions (θx, θy, and θz directions) about each translational axis.

Each of the supported body-side vibration sensors 27 is provided to a corresponding one of the actuators 25 as one unit with the bracket 31 interposed therebetween. In a manner similar to the lines of the actuators 25, the supported body-side vibration sensors 27 are disposed with the detection directions thereof tilted with respect to the base 2. The tilt angle of the line of action of each actuator 25 and the tilt angle of the detection direction of each supported body-side vibration sensor 27 are equal and θ.

The supported body-side vibration sensors 27 are acceleration sensors and each detect a vibration acceleration degree as a vibration state of the supported body 3. The six supported body-side vibration sensors 27 each detect a vibration acceleration degree of the supported body 3 in the detection direction thereof, and consequently, detect vibration acceleration degrees in the three translational directions (X, Y, and Z directions) including the vertical direction and the horizontal direction and in the three rotational directions (θx, θy, and θz directions) about each translational axis in the supported body 3.

As illustrated in FIG. 2, the three base-side vibration sensors 26 are shifted to one side in the Y direction from the center of each active vibration isolation device 20 and are arranged circumferentially about the center.

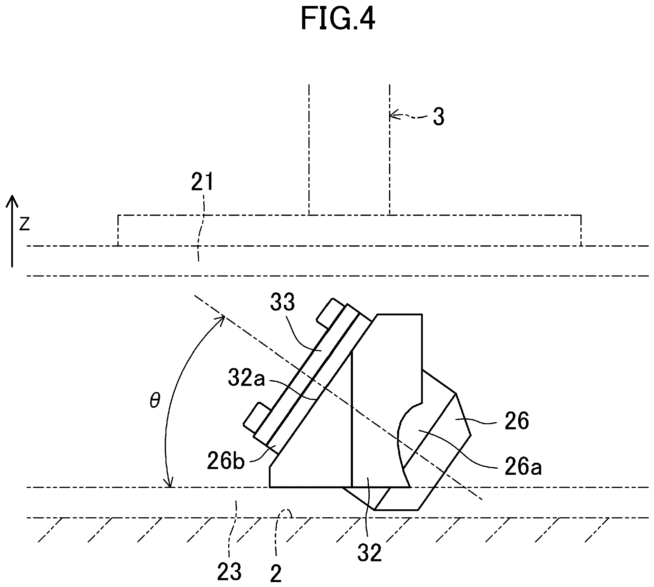

As illustrated in FIG. 4, each of the base-side vibration sensors 26 is placed on the lower plate 23 with the detection direction thereof tilted with respect to the base 2. The tilt angle of the line of action of each actuator 25 and the tilt angle of the detection direction of each base-side vibration sensor 26 are equal and θ.

That is, the tilt angle of the detection direction of each supported body-side vibration sensor 27 and the tilt angle of the detection direction of each base-side vibration sensor 26 are equal and θ.

Three support members 32 are attached to the lower plate 23 and support the base-side vibration sensors 26. Each of the support members 32 causes the detection direction of a corresponding one of the base-side vibration sensors 26 tilted with respect to the base 2. Each support member 32 has a support face 32a orthogonal to the detection direction of the corresponding base-side vibration sensor 26. Each base-side vibration sensor 26 includes an approximately columnar body 26a and a flange 26b provided at the periphery of the body 26a. The body 26a is inserted in a hole (not shown) formed in the support face 32a. The flange 26b is fastened with bolts together with a fixing plate 33 while being in contact with the support face 32a. Accordingly, the base-side vibration sensors 26 are fixed to the support members 32.

The base-side vibration sensors 26 are acceleration sensors, and each detect a vibration acceleration degree as a vibration state of the base 2. The three base-side vibration sensors 26 each detect a vibration acceleration degrees of the base 2 in the detection direction thereof, and consequently, detect vibration acceleration degrees in the three translational directions (X, Y, and Z directions) including the vertical direction and the horizontal direction and in the three rotational directions (θx, θy, and θz directions) about each translational axis in the base 2.

The supported body-side vibration sensors 27 and the base-side vibration sensors 26 are both disposed between the base 2 and the supported body 3 in the vertical direction (Z direction). Specifically, as illustrated in FIGS. 3 and 4, the supported body-side vibration sensors 27 and the base-side vibration sensors 26 are both disposed between the upper plate 21 and the lower plate 23 in the vertical direction (Z direction). As illustrated in FIG. 2, the supported body-side vibration sensors 27 and the base-side vibration sensors 26 are both disposed inside the side plate 22 in the horizontal direction (X direction and Y direction). More specifically, as illustrated in FIG. 2, supported body-side vibration sensors 27 and the base-side vibration sensors 26 are closer to the side plate 22 than the center (see the black point in FIG. 2) of the controller 28 described later in the horizontal direction (X direction and Y direction).

The controller 28 for controlling the actuators 25 are attached (shown by chain double-dashed lines in FIG. 2) to the center of the lower surface of the upper plate 21. The supported body-side vibration sensors 27 and the base-side vibration sensors 26 surround the controller 28.

The controller 28 performs feedback control on the actuators 25 so as to output control signals to the actuators 25 and apply, to the supported body 3, a controlling force for attenuating vibrations of the supported body 3, based on signals input from the supported body-side vibration sensors 27, that is, the vibration acceleration degrees of the supported body 3 detected by the supported body-side vibration sensors 27.

For example, the controller 28 performs filtering on an integral value of the vibration acceleration degrees, multiples the filtered integral value by feedback gains, and obtains the sum of the filtered integral value multiplied by feedback gains, and then inverts the sum. The inverted sum is used as a control input to the actuators 25.

The controller 28 performs feedforward control on the actuators 25 so as to output control signals to the actuators 25 and apply, to the supported body 3, a controlling force for attenuating vibrations transferred from the base 2 to the supported body 3, based on signals input from the base-side vibration sensors 26, that is, vibration acceleration degrees of the base 2 detected by the base-side vibration sensors 26.

For example, the controller 28 performs filtering on vibrations from the base 2, multiplies the filtered vibrations by feedforward gains, and adds the filter vibrations multiplied by feedforward gains to the control inputs to the actuators 25.

### (Control Mode of Overall Active Vibration Isolation System)

As illustrated in FIG. 5, the active vibration isolation devices 20 are disposed at different locations on the base 2 to support the supported body 3. Each of the active vibration isolation devices 20 is completed itself as an active vibration isolation unit, and the active vibration isolation devices 20 are independent of each other. The controller 28 of each of the active vibration isolation devices 20 is configured to apply a controlling force to the corresponding leg 5b as a portion of the supported body 3 corresponding to the location at which the active vibration isolation device 20 is placed, independently of and separately from the controllers 28 of the other active vibration isolation devices 20, based on vibration acceleration degrees of the portions of the supported body 3 and the base 2 corresponding to the location detected by the supported body-side vibration sensors 27 and the base-side vibration sensors 26.

Specifically, the active vibration isolation devices 20 are configured not to transmit and receive various electrical signals to/from one another during vibration isolation. More specifically, each of the active vibration isolation devices 20 generates a control signal corresponding to the controlling force, independently of the supported body-side vibration sensors 27 and the base-side vibration sensors 26 of the other active vibration isolation devices 20. Similarly, each active vibration isolation device 20 is configured not to input the thus-generated control signal to the other active vibration isolation devices 20.

Specifically, the controller 28 of each of the active vibration isolation devices 20 performs feedback control on the actuators 25 so as to attenuate vibrations of the supported body 3 based on vibration acceleration degrees of a portion (leg 5b) of the supported body 3 corresponding to a location at which the active vibration isolation device 20 is placed detected by the supported body-side vibration sensors 27.

The controller 28 of each of the active vibration isolation devices 20 performs feedforward control on the actuators 25 so as to attenuate vibrations transferred from the base 2 to the supported body 3, based on vibration acceleration degrees of a portion of the base 2 corresponding to the location at which the active vibration isolation device 20 is placed detected by the base-side vibration sensors 26.

For example, the controller 28 of the first active vibration isolation device 201 performs feedback control on the actuators 25 so as to apply a controlling force to a portion P1 (first leg 5b1) of the supported body 3 corresponding to a location at which the first active vibration isolation device 201 is placed, based on vibration acceleration degrees of the portion P1 (first leg 5b1) of the supported body 3 corresponding to the location detected by the supported body-side vibration sensors 27.

The controller 28 of the first active vibration isolation device 201 performs feedforward control on the actuators 25 so as to apply a controlling force to the portion P1 (first leg 5b1) of the supported body 3 corresponding to the location at which the first active vibration isolation device 201 is placed, based on vibration acceleration degrees of a portion Q1 (immediately under the first active vibration isolation device 201) of the base 2 corresponding to the location detected by the base-side vibration sensors 26.

The same holds for the other active vibration isolation devices 202, 203, and 204. The second active vibration isolation device 202 applies a controlling force to a portion P2 (second leg 5b2) of the supported body 3, based on vibration acceleration degrees of the portion P2 (second leg 5b2) of the supported body 3 and a portion Q2 (immediately under the second active vibration isolation device 202) of the base 2. The third active vibration isolation device 203 applies a controlling force to a portion P3 (third leg 5b3) of the supported body 3, based on vibration acceleration degrees of the portion P3 (third leg 5b3) of the supported body 3 and a portion Q3 (immediately under the third active vibration isolation device 203) of the base 2. The fourth active vibration isolation device 204 applies a controlling force to a portion P4 (fourth leg 5b4) of the supported body 3, based on vibration acceleration degrees of the portion P4 (fourth leg 5b4) of the supported body 3 and a portion Q4 (immediately under the fourth active vibration isolation device 204) of the base 2.

### (Advantages)

As described above, according to this embodiment, vibration isolation control can be individually performed in accordance with vibration states that vary among locations at which the active vibration isolation devices 20 are placed. Thus, vibration isolation performance can be sufficiently exhibited, as compared to a control method based on a vibration state of the entire supported body 3 or the entire base 2.

In addition, it is sufficient to support the supported body 3 by the four active vibration isolation devices 20. Thus, the configuration can be simplified.

In the manner described above, vibration isolation performance of the active vibration isolation system 1 can be enhanced with a simple configuration.

Vibration isolation performance can be enhanced by performing feedback control in accordance with vibration states of the supported body 3 that vary among locations at which the active vibration isolation devices 20 are placed, that is, vibration states that vary among portions of the supported body 3.

Vibration isolation performance can be enhanced by feedforward control in accordance with vibration states of the base 2 that vary among locations at which the active vibration isolation devices 20 are placed, that is, vibration states that vary among portions of the base 2. This configuration is especially effective in a case where the base 2 is in a poor condition and the vibration states thereof tend to vary among portions.

Since the actuators 25 are tilted with respect to the base 2, one actuator 25 can apply a controlling force to the supported body 3 in both the vertical direction and the horizontal direction. Accordingly, flexibility of layout of the actuators 25 can be increased. Thus, the number of the actuators 25 can be reduced, as compared to a case where the actuators 25 are not tilted with respect to the base 2 and are arranged only in the vertical direction and the horizontal direction.

In addition, the distance between the upper plate 21 and the lower plate 23 can be reduced by tilting the actuators 25 with respect to the base 2. Thus, the height of the active vibration isolation devices 20 can be reduced.

Since the supported body-side vibration sensors 27 are tilted with respect to the base 2, one supported body-side vibration sensor 27 can detect vibration states of the supported body 3 in both the vertical direction and the horizontal direction. Accordingly, flexibility of layout of the supported body-side vibration sensors 27 can be increased. Thus, the number of the supported body-side vibration sensors 27 can be reduced, as compared to a case where the supported body-side vibration sensors 27 are not tilted with respect to the base 2 and are arranged only in the vertical direction and the horizontal direction.

In addition, since the detection direction of the vibration states of the supported body 3 by the supported body-side vibration sensors 27 coincides with the direction in which the controlling force is added by the actuators 25, angle conversion is not needed between these directions, and thus, the configuration of the controller 28 can be simplified.

The base-side vibration sensors 26 are also tilted with respect to the base 2, and the tit angle coincides with the tilt angle of the actuators 25. Thus, advantages similar to those of the supported body-side vibration sensors 27 described above can be obtained.

Since the active vibration isolation devices 20 are arranged while being not in contact with one another, interference of controlling forces among the active vibration isolation devices 20 can be reduced.

The supported body 3 can be stably supported at the four legs 5b by the active vibration isolation devices 20.

Even if the active vibration isolation devices 20 themselves are small in size, the use of the plurality of active vibration isolation devices 20 enables support of the large-size supported body 3.

As compared to an active vibration isolation system in which a supported body is supported by a plurality of active vibration isolation devices and active vibration isolation control is performed as a whole system by operating the active vibration isolation devices in cooperation, it is possible to obtain advantages including unnecessity of constructing a complicated control system and easy installation without special adjustment in installation.

Since both the supported body-side vibration sensors 27 and the base-side vibration sensors 26 are disposed between the upper plate 21 and the lower plate 23, the dimension of each of the active vibration isolation devices 20 in the vertical direction (Z direction) can be reduced, as compared to a case where the sensors 26 or 27 are disposed above the upper plate 21 or below the lower plate 23. In addition, since both the supported body-side vibration sensors 27 and the base-side vibration sensors 26 are disposed inside the side plate 22, dimensions of each of the active vibration isolation devices 20 in the horizontal direction (the X direction and the Y direction) can be reduced, as compared to a case where the sensors 26 or 27 are disposed outside the side plate 22.

### (Other Embodiments)

Although the present disclosure has been described with reference to the preferred embodiment, such description is not restrictive, and various modifidations may be made.

The number of the active vibration isolation devices 20 is not necessarily four, and at least two active vibration isolation devices 20 are sufficient.

The base-side vibration sensors 26 and the supported body-side vibration sensors 27 are not limited to acceleration sensors, and may be displacement sensors that detect displacement of the supported body 3 with respect to the base 2 as a vibration state, for example.

Each of the active vibration isolation devices 20 only needs to include, as vibration detectors, at least one of the supported body-side vibration sensors 27 that detect vibration states of the supported body 3 or the base-side vibration sensors 26 that detect vibration states of the base 2.

Each of the actuators 25 does not need to apply a controlling force in the three rotational directions (θx, θy, and θz directions), and only needs to consequently apply a controlling force to the supported body 3 in the three translational directions (X, Y, and Z directions) including at least the vertical direction and the horizontal direction.

Each of the supported body-side vibration sensors 27 does not need to detect vibration states in the three rotational directions (θx, θy, and θz directions), and only needs to consequently detect vibration states of the supported body 3 in the three translational directions (X, Y, and Z directions) including at least the vertical direction and the horizontal direction.

Each of the base-side vibration sensors 26 does not need to detect vibration states in the three rotational directions (θx, θy, and θz directions), and only needs to consequently detect vibration states of the base 2 in the three translational directions (X, Y, and Z directions) including at least the vertical direction and the horizontal direction.

A surface plate may be interposed between each active vibration isolation device 20 and the base 2. A surface plate may be interposed between each active vibration isolation device 20 and the supported body 3. The surface plate may be included in the supported body or the base.

The actuators 25 are not limited to linear motors, and may be air springs, for example.

The specific methods of feedback control and feedforward control described above are merely examples, and other methods may be employed. For example, in the case of using displacement sensors as described above, the controller 28 can perform displacement feedback control configured to reduce displacement detected by the displacement sensors.

The active vibration isolation devices 20 do not need to be of the same type, and may have different dimensions and performances. For example, in a case where the barycenter of the supported body 3 is shifted from the center of the supported body 3 in the horizontal direction or a case where load distribution of the supported body 3 varies, for example, the active vibration isolation devices 20 are intentionally configured to have various dimensions and performances so that unbalances due to eccentricity of the barycenter and variations of load distribution can be canceled, for example. The active vibration isolation devices 20 do not need to be aligned in the front-rear direction and in the left-right direction, and three active vibration isolation devices 20 may be arranged in a triangle shape, for example.

### [EXAMPLES]

### (Example)

The active vibration isolation system 1 according to this embodiment was used. About 300 kg of a supported body 3 was supported by four active vibration isolation devices 20.

### (Comparative Example)

About 600 kg of a supported body was supported by one conventional active vibration isolation device.

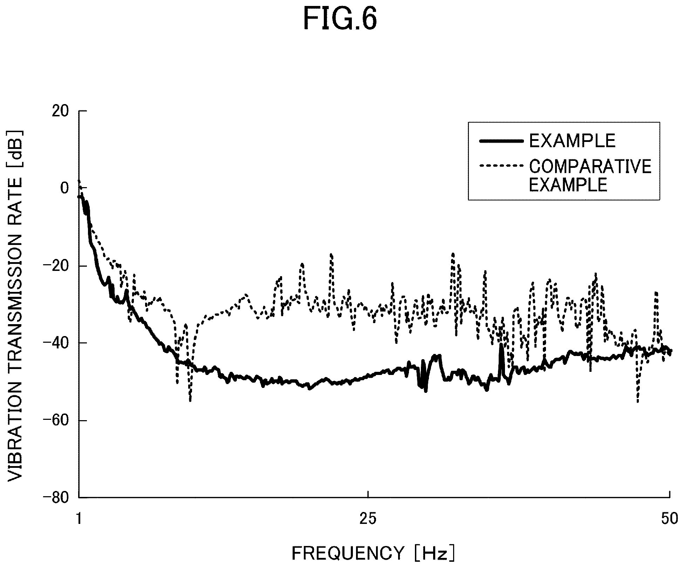

FIG. 6 shows graphs of vibration isolation performance of the example and the comparative example. The abscissa represents frequency [Hz], and the ordinate represents vibration transmission rate [dB]. The vibration transmission rate is a ratio of an acceleration amplitude of the supported body 3 to an acceleration amplitude of the base 2 expressed in decibels. If the vibration transmission rate is less than or equal to 0 dB, it is determined that vibration isolation was appropriately performed in this frequency range. In this example, the vibration transmission rate is less than or equal to 0 dB substantially in the entire measured frequency range, that is, in most part of the range of 50 Hz or less, and thus, it is determined that vibration isolation was appropriately performed. Although comparison cannot be simply carried out because of different weights of the supported bodies, the example shows higher vibration isolation performance than the comparative example especially in the frequency range of 15 Hz to 30 Hz.

### INDUSTRIAL APPLICABILITY

The present disclosure is applicable to an active vibration isolation device, and thus, is extremely useful and has high industrial applicability.

### DESCRIPTION OF REFERENCE CHARACTERS

- θ: tilt angle
- 1: active vibration isolation system
- 2: base
- 3: supported body
- 4: precision instrument
- 5: table
- 5b: leg
- 20: active vibration isolation device
- 21: upper plate
- 23: lower plate
- 24: coil spring (elastic body)
- 25: actuator
- 26: base-side vibration sensor (vibration detector)
- 27: supported body-side vibration sensor (vibration detector)
- 28: controller (control unit)

## Claims

1. An active vibration isolation system 1 comprising a plurality of active vibration isolation devices (20), each of the plurality of active vibration isolation devices (20) including
an elastic body (24) configured to elastically support a supported body (3) to a base (2),
a vibration detector (26, 27) configured to detect vibration states of at least one of the supported body (3) or the base (2) in at least three translational directions including a vertical direction and a horizontal direction,
an actuator (25) configured to apply a controlling force to the supported body (3),
a control unit (28) configured to control the actuator (25) such that the actuator (25) applies a controlling force to the supported body (3) based on the vibration states detected by the vibration detector (26, 27), the controlling force being used for attenuating at least one of vibrations of the supported body (3) or vibrations transferred from the base (2) to the supported body (3), wherein
the active vibration isolation devices (20) are disposed at different locations on the base (2) to support the supported body (3), and
the control unit (28) of each of the active vibration isolation devices (20) is configured to apply the controlling force to a portion of the supported body (3) corresponding to one of the locations at which the active vibration isolation devices (20) are placed, independently of and separately from the control units (28) of the other active vibration isolation devices (20), based on vibration states of a portion of at least one of the supported body (3) or the base (2) corresponding to the location detected by the vibration detector (26, 27).

2. The active vibration isolation system 1 according to claim 1, wherein the actuator (25) is tilted with respect to the base (2).

3. The active vibration isolation system 1 according to claim 2, wherein
the vibration detector (26, 27) is tilted with respect to the base (2), and
a tilt angle θ of the actuators (25) is equal to a tilt angle θ of the vibration detector (26, 27).

4. The active vibration isolation system 1 according to any one of claims 1 to 3, wherein
the active vibration isolation devices (20) are not in contact with one another.
